# EUROPEAN PATENT APPLICATION

(11) **EP 0 678 817 A1**
(43) Date of publication of application: **25.10.1995**
(21) Application number: 94302865.4
(22) Date of filing: 21.04.1994
(51) Int. Cl.: G06F 17/60

(54) **Data capture in a communication network configuration system**

(71) Applicant: BRITISH TELECOMMUNICATIONS public limited company, London EC1A 7AJ (GB)
(72) Inventor: Back, Nigel Reginald, Trimley St. Martin, Suffolk IP10 OUY (GB); O'Brien, Richard, Ipswich, Suffolk IP5 7TU (GB); Webster, Stephen George, Gravesend, Kent DA12 4BN (GB)
(74) Representative: Dutton, Erica L. G.

(57) **Abstract**

A data capture system for use in configuring a communications network from more than one computer system, the data capture system including a user interface, multiple validation means and data mapping means. The data mapping means (14) maps data received at the user interface (20 or 21) from a screen-based structure into a machine ready structure. Embodiments of the invention therefore provide a powerful network configuration system which presents a user friendly interface but generates complex network configuration data. Its output can be used directly in the service management system of a network so configured.

## Description

The present invention relates to data capture in a communications network configuration system.

Communications networks nowadays, particularly private networks, are often provided by multiple computer systems working together to provide both telecommunications services and the associated management. Further, customers, including global customers, have recognised the benefits of having a communications service provider manage their systems for them, allowing the customer to concentrate on their core activities.

The acquisition and management of data in such a scenario can present a significant difficulty for the service provider. Not only may data be presented at different times by many different customers, but it then needs to be consistent across multiple different systems if they are to work together to provide services.

Data can be a major problem facing any computer based technology, this nowadays including communications. Managing the development and implementation of both hardware and software is well understood. Both hardware and software are becoming more data driven to give the flexibility required. Managing that data is now one of the greatest problems faced today.

Data resides at all levels of communications systems, and it must be consistent across those levels to provide the functionality required. Data also resides in all the computer components of a communications network. Typically, there might be twenty different computer systems working together. Data must be consistent across these systems to provide the functionality required of the network.

According to a first aspect of the present invention, there is provided a data capture system for use in configuring a network from more than one computer system, and in the provision and management of communications services by means of said network, wherein the data capture system comprises:
(i) a data base;
(ii) a user interface to the database, which interface comprises data validation means;
(ii) further, rule-based, validation means; and
(iv) data mapping means for mapping data received at the user interface from a screen-based structure into a machine ready structure.

Such a data capture system can be built into a network configuration system by the addition of means for applying data which is output by the data capture system to a set of commands for building the network on a target system.

Hence, according to a second aspect of the present invention, there is provided a network configuration system for use in configuring a network from more than one computer system, and in the provision and management of communication services by means of said network, wherein the network configuration system comprises:
(i) means for capturing data; and
(ii) network configuration means for receiving data from the data capturing means and configuring a network in response to said data, the network comprising a service management system incorporating part or all of said data.

Preferably, the user interface or data capturing means is provided by means of a personal computer, for instance laptop or desktop.

Preferably, also, validation means is provided in one or more of the user interface, data capturing means and the service management system.

Embodiments of the present invention might employ for instance a relational database with a graphical user interface, in the data capture system or means, providing multiple layers of data validation on data captured, prior to being written to a database of the data capture system or means.

Overall, embodiments of the present invention can provide a friendly front-end to a database which front-end defines a customer's network requirements and translates them to a network configuration. Some validation of the data provides a high level of confidence. The output can be electronically transferred to a service management system in the electronic network being configured. This service management system can validate and manipulate the data further, if necessary breaking it down into individual databases for a network of computers used in the network configured. Data can then be distributed in a controlled fashion throughout the network.

Once a network has been configured, embodiments of the present invention will not generally be used as a master database. The network itself will have a service management system designed to be more suitable. However, embodiments of the invention can be used to track the service offerings of the network configured.

An embodiment of the present invention will now be described, by way of example only, with reference to the Figures, in which:
Figure 1 shows a representation of process steps involved in operating a data capture system according to an embodiment of the present invention, and in providing data to a service management system of a configured network;
Figure 2 shows an expanded, schematic view of the data capture system of Figure 1; and
Figure 3 shows process steps in use of the system of Figure 1.

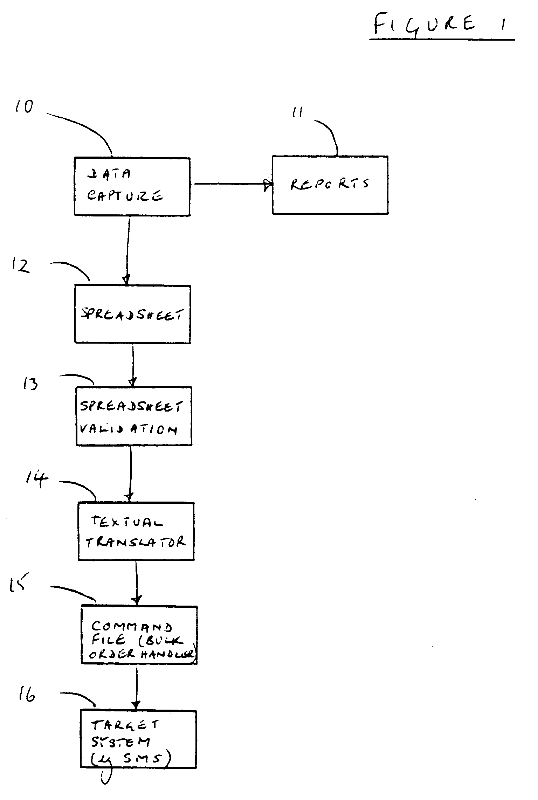

Referring to Figure 1, data is entered at a data capture system 10. The data capture system 10 comprises a relational database, constructed from a number of relational tables. There may be for example 70 such tables where the network to be configured is an international virtual private network. It is entered via a powerful graphical interface providing data validation prior to the data being written to a database of the system 10.

The database and user interface are designed in a programming language called "Omnis 7", and will run on any IBM personal computer, or a compatible system, with 6 MB of Random Access Memory (RAM) or greater and a 386 processor or better. The graphical front-end comprises a set of forms designed to capture customer dependant information required to provision an instance of the network to be configured in respect to that customer. These forms make use of known graphical devices such as "pick lists" and "combo boxes" to constrain choice for a particular item of configuration to a range of legal options. This provides a first level of validation and helps to ensure that data is captured "clean" for the target delivery systems.

A number of rules are coded in the Omnis 7 procedural language to reduce the possibility of inconsistent data being delivered to the target systems. In particular, these rules check that the user inputting the data is not requesting incompatible service configuration options.

Once data has been captured via the interface, and additionally validated, it is written to the system database.

The output from the data capture system 10 can be used to produce paper reports 11, or alternatively can be delivered to a spreadsheet 12 where the data may be inspected or amended in a spreadsheet validation step 13.

From the spreadsheet output, 12, 13, the data is loaded to a textual translator 14 which converts the spreadsheet format into data in system ready form. The textual translator 14 is a personal computer based tool, using the "C" language which runs under DOS. It maps the spreadsheet format data onto a set of commands to build the customer network on the target system 16, via a command file 15. The target system 16 may for instance be the service management system of a communications network.

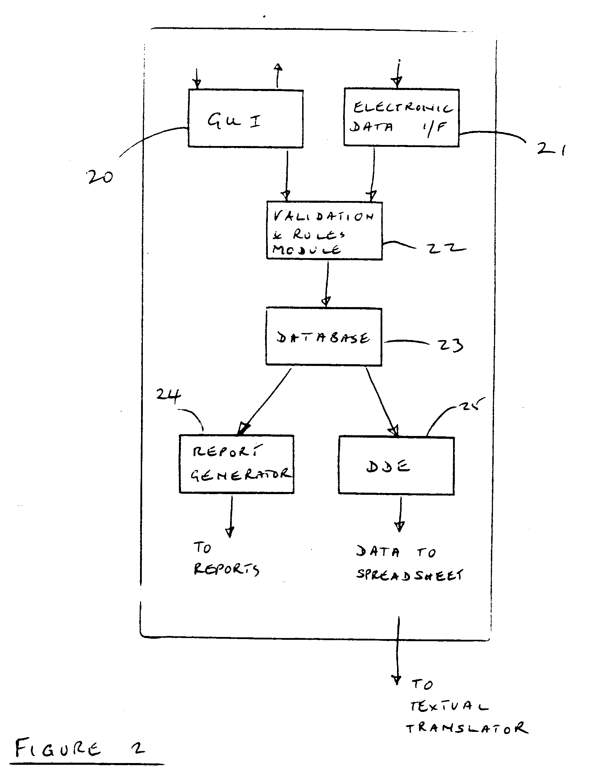

Referring to Figure 2, the data capture system 10 of Figure 1 can be expanded to show the user interface 20 and electronic alternative 21, a validation and rules module 22 and the internal database 23 of the data capture system 10. The user may then select a paper report output 11, by means of a report generator 24, or that the data capture system 10 delivers data to a spreadsheet 12, using a dynamic data exchange mechanism 25, offering data inspection and amendment.

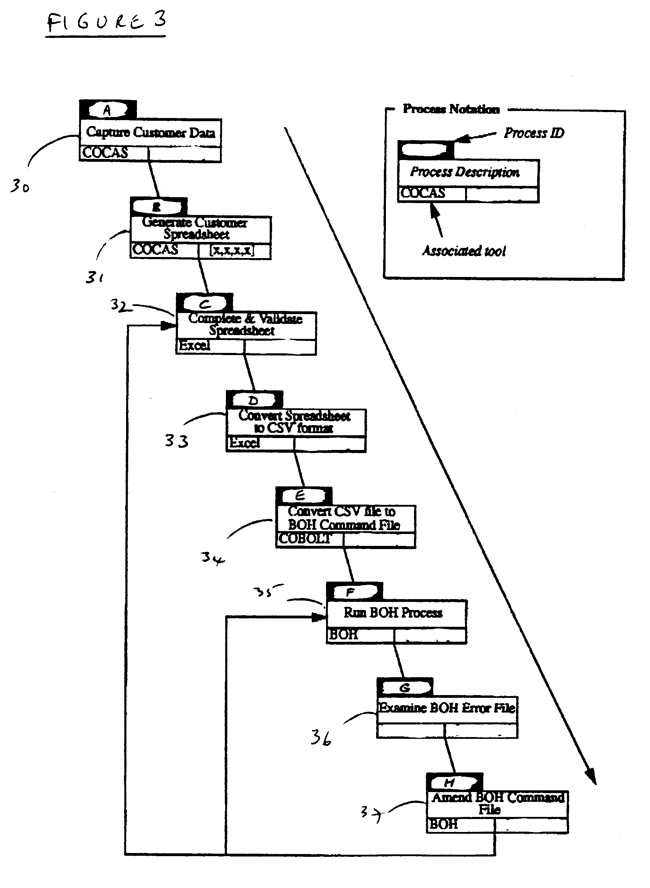

Referring to Figure 3, a process by which new customers and large orders for existing customers may be prepared and bulk loaded onto a service management system is described below.

It will be noted that each process step has associated with it a tool, indicated in the lower left section of each step representation, as set out in the "Process Notation" box. These various tool identifiers are as follows:
COCAS - the data capture system
EXCEL - the spreadsheet system
COBOLT - the textual translation system
BOH - bulk order handler
Figure 3 presents a high level view of the tools and process that support bulk databuild of customer data on a service management system for a network.

As described above, the data capture step 30 uses a PC based tool, COCAS, which supports capture of customer orders. Data captured by the tool is delivered onto an Excel spreadsheet, step 31, for service management related data. Alternatively, not shown in Figure, the data can be delivered onto a set of paper reports, these providing other information such as site address, contact details and billing invoice plan. COCAS provides facilities for detection and correction of errors in customer data files, also as described above, before data is output to the Excel spreadsheet at step 32. The spreadsheet definition will contain entries for all the service management system tables. COCAS may only populate a limited set of these tables, leaving remaining tables to be completed, for instance manually. The spreadsheet data may also be checked or validated at this stage. There are some checks which are necessarily performed to prepare the spreadsheet data for processing by the COBOLT system. These include replacement of characters, deletion of characters not accepted by the COBOLT system 14, the addition of switch and trunk identifiers to the relevant data table and column sizing.

The Excel spreadsheet system 12, 13 also needs to convert the spreadsheet data to a CSV (Comma Separated Variable) format, step 33. The COBOLT textual translator 14 is designed to convert CSV files into textual command file for the bulk order handler, step 34. That is, the textual translator 14 converts the CSV file to a format suitable for loading to the bulk order handler interface. Once the textual translator 14 has successfully created a BOH command file at step 34, it will create a "readme" file which provides a summary of the number and type of records converted.

Errors encountered at this stage are likely to be due to input/output failures, such as the textual translator 14 being unable to find an input CSV file or being unable to write an output file because the relevant SMS disc is full or the SMS is not running. Another error occurring at this stage is where illegal data is found in the CSV file.

The next step 35 of the process is to run the bulk order handler process. To do this, a user account has to be set up on the service management system of the target system. This stage also requires the "readme" file, described above.

The user logs onto the SMS and the bulk order handler process is run using a command provided at the end the "readme" file.

The BOH process, run at step 35, produces an error file which is a list of errors encountered while processing the customer file produced by the COBOLT system. This error file is located on the service management system. The error file can be examined using a text editor, error messages providing a table number, pointing to the SMS table causing the error, and an error code. This is done at step 36 of Figure 3.

Step 37 provides modification of the BOH input file following inspection of an error file. This step 37 therefore has two outputs, one providing for changes to be made directly to the Excel spreadsheet, indicated by the feedback line to step 32, or the BOH error file which contained failed commands may be amended and resubmitted directly to the BOH process, this being indicated by the feedback line to step 35.

Scripts may be used to provide additional support for the bulk load process. For instance, scripts might include the following functions:
a) submission of COBOLT generated files to the BOH
b) clearing of the SMS download area of all deferred transactions for a given customer ID (this script should be used with extreme caution)
c) removal of the need to cross reference between a BOH file and an "alarms and alerts guide" to determine actual cause of error. This last script might take as input the BOH error file and produce a corresponding output file containing a translation of the error codes into a textual description.

## Claims

1. A data capture system for use in configuring a network from more than one computer system, and in provision and management of communications services by means of said network, wherein the data capture system comprises:
i) a database;
ii) a user interface to the database, which interface comprises data validation means;
iii) further, rule-based, validation means; and
iv) data mapping means for mapping data received at the user interface from a screen-based structure into a machine ready structure.

2. A network configuration system comprising a data capture system according to Claim 1.

3. A network configuration system for use in configuring a network from more than one computer system, and in the provision and management of communications services by means of said network, wherein the network configuration system comprises:
i) means for capturing data; and
ii) network configuration means for receiving data from the data capturing means and configuring a network in response to said data, the network comprising a service management system incorporating part or all of said data.

4. A communications network configured from more than one computer system, which network comprises a service management system having an interface to receive data from data mapping means provided by a data capture system according to Claim 1.
